# EUROPÄISCHE PATENTSCHRIFT

(11) **EP 2 522 475 B1**
(45) Veröffentlichungstag und Bekanntmachung des Hinweises auf die Patenterteilung: **04.11.2015**
(21) Anmeldenummer: 12179386.3
(22) Anmeldetag: 26.04.2010
(51) Int. Cl.: B27C 9/04, B27G 1/00, B27M 1/08, B23Q 1/62, B23Q 1/01

(54) **Vorrichtung zum Erkennen und Korrigieren von Fehlstellen in Holz**
Apparatus for detecting and correcting flaws in wood
Dispositif pour détecter et corriger des points défectueux dans le bois

(30) Priorität: 30.04.2009 AT 6722009
(43) Veröffentlichungstag der Anmeldung: 14.11.2012
(62) Teilanmeldung aus: 10720878.7
(73) Patentinhaber: Fill Gesellschaft m.b.H., 4942 Gurten (AT)
(72) Erfinder: Fill, Andreas, 4942 Gurten (AT)
(74) Vertreter: Burger, Hannes

(56) Entgegenhaltungen:
- EP-A2- 0 239 143
- EP-A2- 1 837 189
- AT-U2- 11 042
- DE-A1- 10 223 831
- DE-U1-202008 008 428
- US-A- 4 614 555
- US-A1- 2007 209 734

## Beschreibung

### TECHNISCHES GEBIET

Die Erfindung betrifft eine Vorrichtung gemäß dem Oberbegriff des Anspruchs 1.

### STAND DER TECHNIK

Eine gattungsgemäße Vorrichtung ist beispielsweise aus der EP 239 143 A2 bekannt, welche die zu reparierenden Fehlstellen mit einem Sensor erkennt, der üblicherweise aus einer Mehr- bzw. Vielzahl an zum Sensor verschalteten Sensoreinheiten besteht. Damit lässt sich die Lage der Fehlstellen am Holz, insbesondere an Holzplatten oder Latten bzw. Trägern eindeutig feststellen. Im Anschluss daran wird das Produkt in festgelegten Taktschüben und Abständen einer oder mehreren Arbeitsstationen zugeleitet, in denen die erforderlichen Ausbesserungsarbeiten durchgeführt werden. Dazu wird ein auszubesserndes Holz mit der Fördereinrichtung zu einem Ausbesserungswerkzeug verlagert, dort angehalten und anschließend die Fehlstelle mit dem Ausbesserungswerkzeug versorgt, wonach das entsprechende Holz gegebenenfalls bis zur nächsten Fehlstelle oder Arbeitsstation weitergefördert wird. Zu diesem Zweck können entlang des Förderbandes mehrere derartiger Werkzeuge vorgesehen sein, denen je ein gesonderter Antrieb zugeordnet ist.

Eine andere Vorrichtung zum Ausbessern von Fehlstellen in Holz (DE 102 23 831 Al) umfasst auf einem Portal angeordnete Werkzeuge, die quer zur Förderrichtung des Holzes velagerbar angeordnet sind. Diese Vorrichtung benötigt allerdings eine nicht unerhebliche Anzahl an Portalen, was die Baulänge der Vorrichtung in unerwünschtem Masse erhöht. Ein Brett an einer bestimmten Stelle zu bearbeiten während es einem kontinuierlichen Vorschub unterliegt ist beispielsweise aus der EP 2 006 060 A1 bekannt.

Zudem können Fehlstellen auch manuell erkannt und repariert werden, was sich für eine Großserienfertigung allerdings nicht rechnet. Ein wesentlicher Nachteil dieser bekannten Vorrichtung liegt darin, dass das Holz zum Bearbeiten stets angehalten werden muss und entsprechend lange Fördereinrichtungen vorzusehen sind, wenn mehrere Bearbeitungseinrichtungen in Vorschubrichtung hintereinander angeordnet sind.

### DARSTELLUNG DER ERFINDUNG

Ausgehend von einem Stand der Technik der vorgeschilderten Art liegt der Erfindung die Aufgabe zugrunde, eine Vorrichtung zum Erkennen und Korrigieren von Fehlstellen in Holz zu schaffen, die bei gegenüber dem Stand der Technik verkürzter Baulänge einen erhöhten Durchsatz an zu erkennenden und korrigierenden Fehlstellen ermöglicht.

Die Erfindung löst diese Aufgabe durch die Merkmale des Anspruchs 1.

Sind zudem wenigstens zwei Führungsträger je Portal vorgesehen, so können problemlos zwei, oder auch beim Vorsehen mehrerer Führungsträger mehrere Fehlstellen, die insbesondere an einem Holzstück oder an mehreren nebeneinandergereihten, gegebenenfalls in Förderrichtung zueinander versetzt angeordneten, Holzstücken auftreten, ohne ein Anhalten der Fördereinrichtung versorgt werden.

Eine weitere diesbezügliche Verbesserung ergibt sich, wenn dem Portal zwei Querführungen für Führungsträger zugeordnet sind, wobei eine Querführung wenigstens einen gegen die Förderrichtung und die andere Querführung wenigstens einen in die Förderrichtung vom Portal abragenden Führungsträger umfasst. Damit können in Förderrichtung beispielsweise zwei Gruppen an Werkzeugen vorgesehen werden, die für sich entlang der Querführung verlagerbar sind. Mit einer auf diese Art und Weise möglichen Erhöhung der Anzahl an Werkzeugen können beispielsweise unterschiedliche Arten und Farben an Ausbesserungsmaterialien mit einer Vorrichtung gleichermaßen angewendet werden. Dies insbesondere dann, wenn je Querführung wenigstens zwei vorzugsweise mehrere Führungsträger vorgesehen sind. Dadurch können beispielsweise dunkle und helle Fehlstellen im Holz gleichermaßen in vorteilhafter Weise mit entsprechenden Ausbesserungsmitteln behandelt werden.

Der Erfindung liegt der wesentliche Vorteil zugrunde, dass eine derartige Vorrichtung gegenüber dem Stand der Technik weniger Bauraum benötigt, insbesondere eine wesentliche kürzere Baulänge aufweist, da die Bearbeitungseinheiten sowohl in Serie als auch parallel zueinander an einem Portal angeordnet sind und gegebenenfalls sogar alle Werkzeuge gleichzeitig an einem Werkstück arbeiten können. Ein Werkzeug umfasst beispielsweise eine mechanische Bearbeitungseinheit, Dübelsetzeinheit, Flicksetzeinheit od. dgl. bzw. eine Dosiereinheit, Mischeinheit oder Ausbesserungseinheit für eine aushärtende Masse.

Das Ausbessern der Fehlstellen erfolgt im Durchlauf, also insbesondere ohne Anhalten der Fördereinrichtung, wobei die Bearbeitungseinheiten mit mindestens zwei Freiheitsgraden, in und quer zur Fördereinrichtung ausgestattet sind. Dass das Werkzeug zudem senkrecht gegen die Fördereroberfläche anstellbar sein kann, versteht sich von selbst.

Ein Verfahren zum Betreiben einer erfindungsgemäßen Vorrichtung, bei dem die Fehlstellen von auf einem Längsförderer aufliegenden Hölzern zuerst von einem Sensor erkannt, vermessen und die Daten zwischengespeichert werden, wonach die Fehlstellen mit einem in Förderrichtung dem Sensor nachgeordne-ten Werkzeug ausgebessert werden zeichnet sich dadurch aus, dass die Messdaten der vom Sensor aufgenommene Fehlstellen mit im Speicher abgelegten Messdaten, insbesondere Referenzdaten, abgeglichen werden und aus dem Abgleich die zum Ausbessern erforderliche Materialmenge errechnet und den aufgenommenen Messdaten zugeordnet wird und dass das Ausbessern der Fehlstellen bei laufender Fördereinrichtung erfolgt und das Werkzeug zum Ausbessern einer jeweiligen Fehlstelle gegenüber der bewegten Fehlstelle verlagert wird.

Um dabei den Einsatz an Ausbesserungsmaterialien möglichst gering zu halten, werden die Messdaten der vom Sensor aufgenommenen Fehlstellen mit im Speicher abgelegten Messdaten, insbesondere Referenzdaten, abgeglichen und wird aus dem Abgleich die zum Ausbessern der jeweiligen Fehlstelle erforderliche Mindestmaterialmenge errechnet und den aufgenommenen Messdaten zugeordnet. Dieses System ist insbesondere selbstlernend auszuführen, wodurch, beispielsweise nach einem zusätzlichen Vermessen der Fehlstelle nach einem Bearbeiten und einem Vergleich der vor und nach der Ausbesserung aufgenommenen Daten, etwaige Korrekturen in den Referenzdaten automatisch oder manuell vorgenommen werden können bzw. neue Referenzdaten hinzugefügt werden.

Durch diese Maßnahme lässt sich die Bearbeitungsgeschwindigkeit erheblich verbessern. Zudem kann dabei die Fördergeschwindigkeit der Fördereinrichtung in Abhängigkeit der Anzahl der auszubessernden Fehlstellen und der Anzahl der vorhandenen Werkzeuge im Sinne einer Erzielung einer maximalen Förderleistung eingestellt werden.

Da eine möglichst hohe Produktionsgeschwindigkeit erreicht werden soll, empfiehlt es sich, wenn für die aufgenommenen Messdaten in Abhängigkeit der jeweiligen Lage und der errechneten zum Ausbessern der jeweiligen Fehlstelle erforderlichen Materialmenge und der dafür erforderlichen Ausbesserungszeit jene Kombination an Bearbeitungsfolge gewählt wird, mit der eine maximale Fördereinrichtungsvorschubgeschwindigkeit erzielt wird. Der Rechner variiert dabei insbesondere alle möglichen Bearbeitungsreihenfolgen der vom Sensor aufgenommenen und vermessenen Fehlstellen und wählt jene aus, mit der die größte Vorschubsgeschwindigkeit erzielt werden kann, welche dann von einer entsprechenden Steuerung vorgegeben wird. Dazu ist es erforderlich, dass die Recheneinheit nicht nur sämtliche Daten bzw. Lagen von Fehlstellen, sondern auch der Werkzeuge kennt.

Vorteilhafte Verhältnisse ergeben sich, wenn der Sensor die Farbe des die Fehlstelle umgebenden Materials erkennt, der Rechner die Farbe eines verfügbaren Füllmaterials bestimmt und im Speicher der Fehlstelle zuordnet, wonach der Fehlstelle zum Ausbessern ein Werkzeug mit einer geeigneten Ausbesserungsmaterialfarbe zugewiesen und bei der Berechnung der Vorschubsgeschwindigkeit berücksichtigt wird.

Wesentlich für die Erfindung ist, dass die Hölzer in Bewegung bearbeitet werden und die Vorschubgeschwindigkeit während dieser Bearbeitung derart variabel eingestellt bzw. gewählt wird, dass ein möglichst großer Durchsatz erzielt wird. Dazu wertet eine Rechnereinheit die Sensordaten und die Daten aus der Fehlererkennung sowie gegebenenfalls zusätzliche Daten eines Bedieners mit Algorithmen derart aus, dass eben diese maximale Förderleistung erreicht wird. Mit der Erfindung ist es möglich eine Vielfalt an Produkten und Produktvarianten gleichermaßen in einer Vorrichtung zu bearbeiten, ohne erhebliche Umrüstzeiten der Vorrichtung in Kauf nehmen zu müssen. Mit der Erfindung wird zudem die Prozesssicherheit erhöht, wobei durch entsprechende Algorithmen die optimale Dosiermenge, die optimale Arbeitsgeschwindigkeit der Bearbeitungseinheiten sowie die Bearbeitungsreihenfolge und die Aufteilung der nötigen Arbeiten auf die einzelnen Bearbeitungseinheiten so errechnet wird, dass die Vorschubgeschwindigkeit des zu bearbeitenden Produkts maximal wird.

### KURZE BESCHREIBUNG DER ZEICHNUNGEN

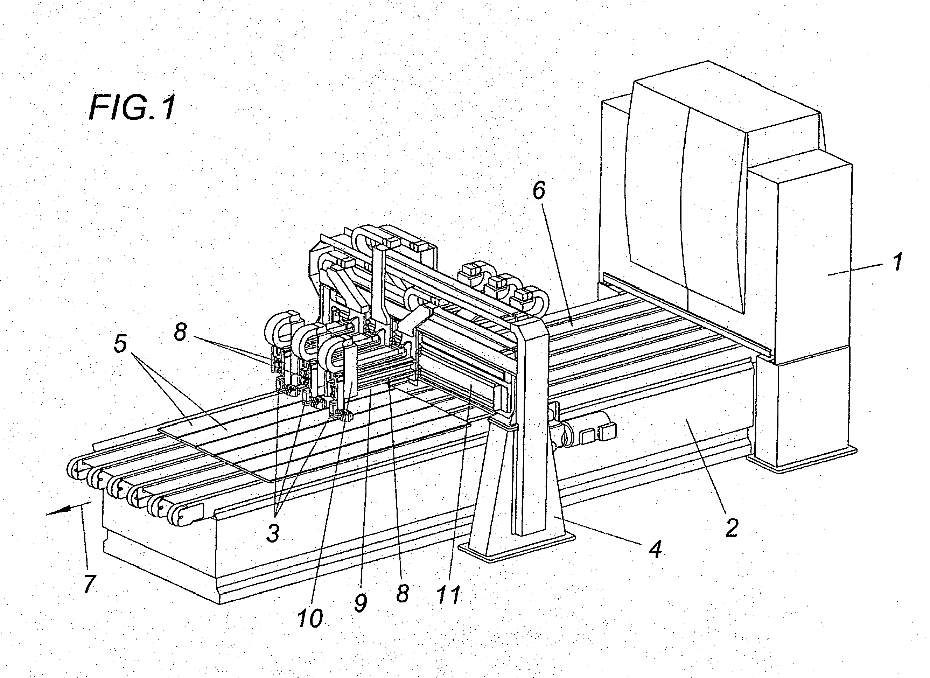

In der Zeichnung ist die Erfindung anhand eines Ausführungsbeispieles schematisch dargestellt. Es zeigen
Fig. 1 eine erfindungsgemäße Vorrichtung in Schrägansicht,

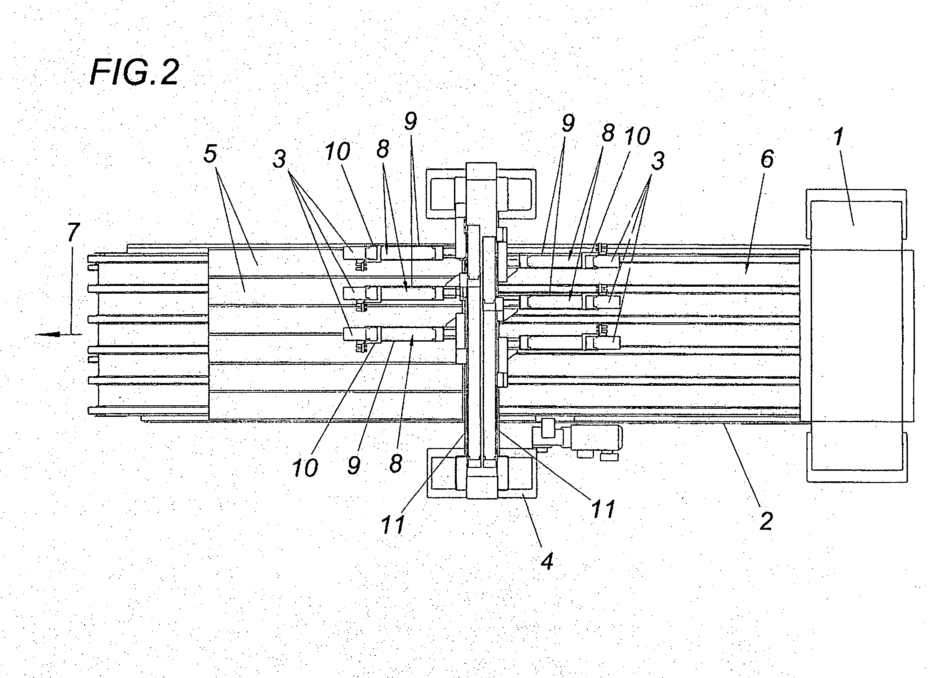

Fig. 2 die Vorrichtung aus Fig. 1 in Draufsicht,

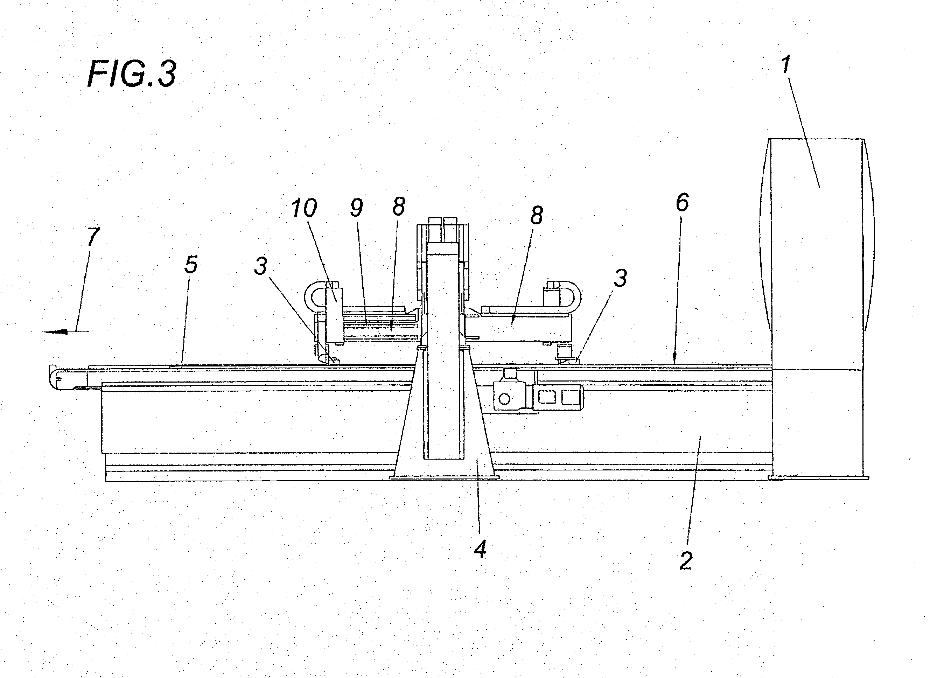

Fig. 3 die Vorrichtung aus Fig. 1 und 2 in Seitenansicht,

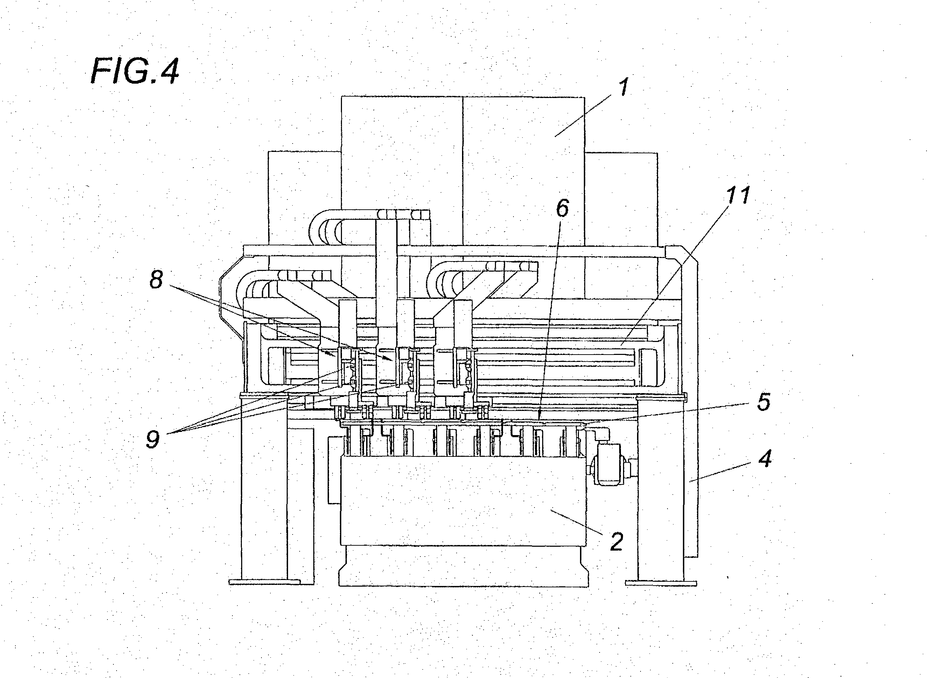

Fig. 4 die Vorrichtung aus Fig. 1 bis 3 in Vorderansicht und

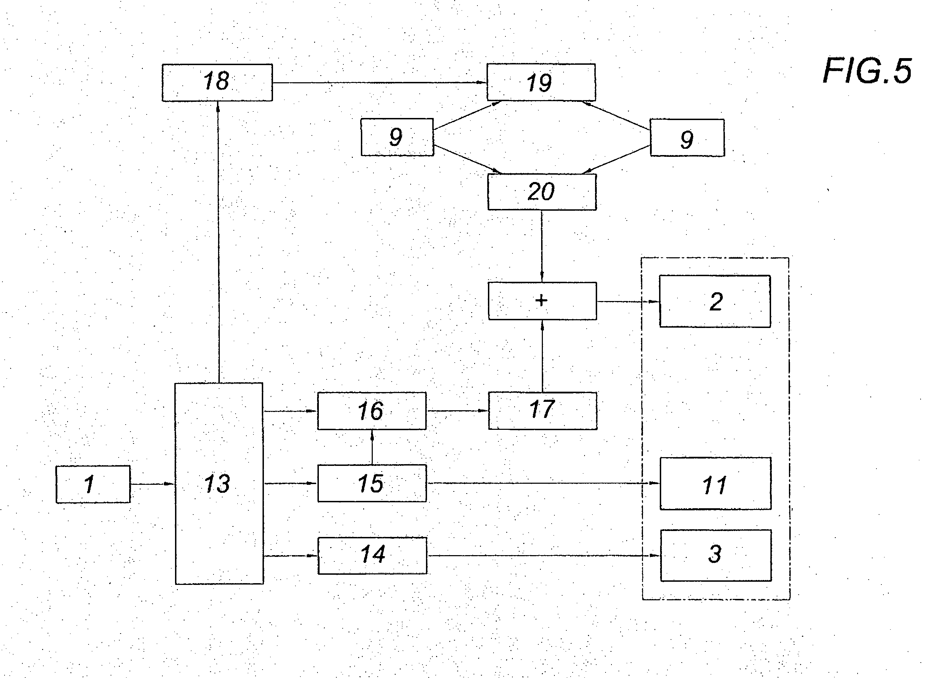

Fig. 5 ein Funktionsschema einer erfindungsgemäßen Anlage.

### WEG ZUR AUSFÜHRUNG DER ERFINDUNG

Eine Vorrichtung zum Erkennen und Korrigieren von Fehlstellen in Holz um-fasst einen Fehlstellen erkennenden und messenden Sensor 1 der einem Förderband 2 ebenso zugeordnet ist, wie ein mehrere Ausbesserungswerkzeuge 3 tragendes Portal 4, welches das Förderband 2 überspannt. Das zu prüfende Holz, im dargestellten Ausführungsbeispiel Holzlatten 5, liegen auf der Fördereroberfläche 6 auf und werden mit dem Förderband 2 zuerst durch den Scanner 1 verlagert und an schließend den Bearbeitungswerkzeugen 3 zugeführt. Die einzelnen Bearbeitungswerkzeuge 3 sind rechnergesteuert entlang wenigstens zweier, vorzugsweise dreier, Achsen bezüglich der Förderoberfläche 6 mit Vorschüben verlagerbar.

Um einerseits mehrere Fehlstellen gleichzeitig ausbessern zu können ohne anderseits das Förderband 2 zum Ausbessern der Fehlstellen 2 anhalten zu müssen, sind die Werkzeuge 3 auf einem die Fördereinrichtung 2 quer zur Förderrichtung 7 überspannendes Portal 4 angeordnet, wobei dem Portal 4 mehrere quer zur Förderrichtung 7 verlagerbare Führungsträger 8 zugeordnet sind, entlang deren in Förderrichtung 7 ausgerichteten Führungen 9 je ein Werkzeugschlitten 10 verlagerbar ist. Damit ist gewährleistet, dass das Holz 5 während es unter Vorschub unter dem Portal 4 durchgeführt wird mit den Ausbesserungswerkzeugen 3 bearbeitet werden kann, wobei das Werkzeug 3 entlang der Führungen 9 und der Portalführung 11 einer Fehlstelle folgend verlagerbar ist. Des Weiteren sind am Portal 4 zwei Querführungen 11 für Führungsträger 8 vorgesehen, wobei eine Querführung 11 drei gegen die Förderrichtung 7 und die andere Querführung 11 drei in die Förderrichtung 7 vom Portal 4 abragende Führungsträger 8 umfasst.

Zum Ausbessern etwaiger Fehlstellen werden die Hölzer 5 durch den Sensor 1 verlagert, diese erkennt Fehlstellen und speichert die entsprechenden Fehlstellendaten und Fehlstellenlagen in einen Datenspeicher ab, wonach die Fehlstellen mit einem in Förderrichtung dem Sensor nachgeordneten Werkzeug 3 bei laufender Fördereinrichtung 2 ausgebessert werden. Dazu wird das Werkzeug 3 mit dem Vorschub gegenüber der jeweiligen Fehlstelle verlagert.

Der Sensor 1 schreibt seine Daten in den Speicher einer Recheneinheit 13, welche aus den aufgenommenen Messdaten der Fehlerstellen und deren jeweiliger Lage zusammen mit den errechneten, zum Ausbessern der jeweiligen Fehlstellen erforderlichen Materialmengen und den dafür erforderlichen Ausbesserungszeiten eine Kombination einer Bearbeitungsfolge auswählt, mit der eine maximale Fördereinrichtungsvorschubgeschwindigkeit erzielt wird. Der Rechner 13 steuert über eine Steuereinheit 14 beispielsweise den Auftragskopf einer Ausbesserungsmaterialdosiereinrichtung, also des Werkzeugs 3 an. Des Weiteren ergibt eine Steuerung 15 die Vorschubgeschwindigkeit 11 für die Quervorschübe der Führungsträger 8 vor. In einem Modul 16 erfolgt die Ermittlung der jeweiligen schnellsten Bearbeitungsreihenfolge für die Fehlstellen, die zusammen mit den Ansteuerungsdaten für Vorschübe und Förderergeschwindigkeit in den Speicher 17 einer virtuellen Vorschubsachse abgelegt wird. Gleichermaßen ist eine Steuerung 18 vorgesehen, welche den Vorschub 19 der den einzelnen Führungen 9 zugeordneten Werkzeugschlitten 10 ansteuert. Diese Daten werden auf den Vorschub des Förderbandes 2 aufsynchronisiert 20 und abschließend mit den Daten 17 abgeglichen und die Fördereinrichtung 2 entsprechend angesteuert.

## Patentansprüche

1. Vorrichtung zum Erkennen und Korrigieren von Fehlstellen in Holz mit einem Fehlstellen erkennenden und -messenden Sensor (1), mit einer Fördereinrichtung (2) für das zu prüfende Holz (5) und mit etwaige Fehlstellen ausbessernden Werkzeugen (3), die rechnergesteuert entlang wenigstens zweier, vorzugsweise dreier, Achsen bezüglich der Fördereroberfläche (6) mit Vorschüben verlagerbar sind wobei die Werkzeuge auf einem die Fördereinrichtung quer zur Förderrichtung überspannenden Portal quer zur Förderrichtung verlagerbar angeordnet sind, **dadurch gekennzeichnet, dass** der Sensor (1) dazu eingerichtet ist, seine Daten in den Speicher einer Recheneinheit (13) zu schreiben, welche dazu eingerichtet ist, aus den aufgenommenen Messdaten der Fehlstellen und deren jeweiliger Lage zusammen mit errechneten, zum Ausbessern der jeweiligen Fehlstellen erforderlichen Materialmengen und den dafür erforderlichen Ausbesserungszeiten eine Kombination einer Bearbeitungsfolge auszuwählen, mit der eine maximale Fördereinrichtungsvorschubgeschwindigkeit erzielt wird, wobei eine Steuerung (18) vorgesehen ist, welche die Vorschübe der Werkzeuge (3) ansteuert und auf einen Vorschub der Fördereinrichtung (2) aufsynchronisiert, wobei dem Portal wenigstens ein am Portal quer zur Förderrichtung verlagerbarer Führungsträger (8) zugeordnet ist, entlang dessen in Förderrichtung ausgerichteter Führung (9) ein Werkzeugschlitten verlagerbar ist.

2. Vorrichtung nach Anspruch 1, **dadurch gekennzeichnet, dass** wenigstens zwei Führungsträger (8) die Portal (4) vorgesehen sind.

3. Vorrichtung nach Anspruch 2, **dadurch gekennzeichnet, dass** dem Portal (4) zwei Querführungen (11) für die Führungsträger (8) zugeordnet sind, wobei eine Querführung (11) wenigstens einen gegen die Förderrichtung (7) und die andere Querführung (11) wenigstens einen in die Förderrichtung (7) vom Portal (4) abragenden Führungsträger (8) umfasst.

4. Vorrichtung nach Anspruch 3, **dadurch gekennzeichnet, dass** je Querführung wenigstens zwei, vorzugsweise mehrere Führungsträger vorgesehen sind.

5. Verfahren zum Betreiben einer Vorrichtung nach einem der Ansprüche 1 bis 4, bei dem die Fehlstellen von auf einem Längsförderer aufliegenden Hölzern zuerst von einem Sensor erkannt, vermessen und die Daten zwischengespeichert werden, wonach die Fehlstellen mit einem in Förderrichtung dem Sensor nachgeordneten Werkzeug ausgebessert werden, **dadurch gekennzeichnet, dass** die Messdaten der vom Sensor aufgenommenen Fehlstellen mit im Speicher abgelegten Messdaten, insbesondere Referenzdaten, abgeglichen werden und aus dem Abgleich die zum Ausbessern erforderliche Materialmenge errechnet und den aufgenommenen Messdaten zugeordnet wird und dass das Ausbessern der Fehlstellen bei laufender Fördereinrichtung erfolgt und das Werkzeug zum Ausbessern einer jeweiligen Fehlstelle gegenüber der bewegten Fehlstelle verlagert wird.

6. Verfahren nach Anspruch 5, **dadurch gekennzeichnet, dass** die Fördergeschwindigkeit der Fördereinrichtung in Abhängigkeit der Anzahl der auszubessernden Fehlstellen und der Anzahl an vorhandenen Werkzeugen im Sinne einer Erzielung einer maximalen Förderleistung eingestellt wird.

7. Verfahren nach einem der Ansprüche 5 oder 6, **dadurch gekennzeichnet, dass** für die aufgenommenen Messdaten in Abhängigkeit der jeweiligen Lage und der errechneten zum Ausbessern der jeweiligen Fehlstelle erforderlichen Materialmenge und dafür erforderlichen Ausbesserungszeit jene Kombination an Bearbeitungsfolge gewählt wird, mit der eine maximale Fördereinrichtungsvorschubsgeschwindigkeit erzielt wird.

8. Verfahren nach einem der Ansprüche 5 bis 7, **dadurch gekennzeichnet, dass** der Sensor die Farbe des die Fehlstelle umgebenden Materials erkennt, der Rechner die Farbe des Füllmaterials errechnet und im Speicher mit den Daten der Fehlstelle abspeichert, wonach der Fehlstelle zum Ausbessern ein Werkzeug mit einer geeigneten Ausbesserungsmaterialfarbe zugewiesen und bei der Berechnung der Vorschubgeschwindigkeit berücksichtigt wird.

## Claims

1. Apparatus for detecting and correcting flaws in wood, comprising a sensor (1) that detects and measures flaws, a conveying device (2) for the wood (5) to be checked, and tools (3) which repair any flaws that may be present and can be displaced in a computer-controlled manner along at least two, preferably three, axes with respect to the conveyor surface (6) by way of advancing motions, wherein the tools are disposed displaceably transversely to the conveying direction on a gantry spanning the conveying device transversely to the conveying direction, **characterized in that** the sensor (1) is adapted to write its data into the memory of a processing unit (13), which is adapted to select a combination of a processing sequence from the recorded measurement data of the respective flaws and the respective position thereof together with calculated quantities of material required to repair the respective flaws and the repair times required for this, by which means a maximum speed of advance of the conveying device is achieved, wherein a controller (18) is provided which activates the advancing motions of the tools (3) and synchronizes to an advancing motion of the conveying device (2), wherein the gantry is associated with at least one guide carrier (8) which can be displaced transversely to the conveying direction on the gantry and along the guide (9) of which, oriented in the conveying direction (7), a tool carriage (10) can be displaced.

2. The apparatus according to claim 1, **characterized in that** at least two guide carriers (8) are provided per gantry (4).

3. The apparatus according to claim 2, **characterized in that** the gantry (4) is assigned two transverse guides (11) for the guide carriers (8), wherein a transverse guide (11) comprises at least one guide carrier (8) which projects contrary to the conveying direction (7) and the other transverse guide (11) comprises at least one guide carrier (8) which projects in the conveying direction (7) from the gantry (4).

4. The apparatus according to claim 3, **characterized in that** at least two, preferably more guide carriers are provided per transverse guide.

5. Method for operating an apparatus according to any one of claims 1 to 4, wherein the flaws of timbers resting on a longitudinal conveyor are initially detected by a sensor, measured and the data are stored intermediately, after which the flaws are repaired by means of a tool located downstream of the sensor in the conveying direction, **characterized in that** the measurement data of the flaws recorded by the sensor are compared with measurement data filed in the memory, in particular reference data, and the quantity of material required for the repair is calculated from the comparison and is assigned to the recorded measurement data and that the repair of the flaws takes place when the conveying device is running and the tool for repairing a respective flaw is displaced with respect to the moving flaw.

6. The method according to claim 5, **characterized in that** the conveying speed of the conveying device is adjusted depending on the number of flaws to be repaired and the number of available tools with a view to achieving a maximum conveying capacity.

7. The method according to any one of claims 5 or 6, **characterized in that** for the recorded measurement data as a function of the respective position and the required quantity of material calculated for repairing the respective flaw and the repair time required for this, that combination of processing sequence is selected with which a maximum speed of advance of the conveying device can be achieved.

8. The method according to any one of claims 5 to 7, **characterized in that** the sensor detects the colour of the material surrounding the flaw, the computer calculates the colour of the filling material and stores this in the memory with the data of the flaw after which the flaw is assigned a tool with a suitable repair material colour for the repair and this is taken into account in the calculation of the speed of advance.

## Revendications

1. Dispositif permettant de détecter et corriger des défauts dans le bois, comportant un capteur (1) qui détecte et mesure les défauts, comportant un dispositif de transport (2) pour le bois (5) à contrôler, et comportant des outils (3) qui sont destinés à réparer les éventuels défauts et qui, commandés par un ordinateur, peuvent être déplacés avec des vitesses d'avance par rapport à la surface (6) du dispositif de transport le long d'au moins deux, de préférence trois axes, lesdits outils étant disposés de manière mobile transversalement à la direction de transport sur un portique enjambant le dispositif de transport transversalement à la direction de transport, **caractérisé en ce que** le capteur (1) est configuré pour écrire ses données dans la mémoire d'une unité de calcul (13), laquelle est configurée pour sélectionner, à partir des données de mesure enregistrées des défauts et leur position respective conjointement avec des quantités de matière calculées, nécessaires pour réparer les défauts concernés et les temps de réparation requis à cet effet, une combinaison de séquences opératoires qui permet d'obtenir une vitesse d'avance maximale du dispositif de transport, une commande (18) étant prévue, laquelle commande les vitesses d'avance des outils (3) et les synchronise avec une vitesse d'avance du dispositif de transport (2), au moins une console de guidage (8), mobile sur le portique transversalement à la direction de transport, étant associée au portique, et le long de la glissière (9) de celle-ci, orientée dans la direction de transport, peut se déplacer un chariot porte-outil.

2. Dispositif selon la revendication 1, **caractérisé en ce qu'**au moins deux consoles de guidage (8) sont prévues sur chaque portique (4).

3. Dispositif selon la revendication 2, **caractérisé en ce que** deux glissières transversales (11) pour les consoles de guidage (8) sont associées au portique (4), une glissière transversale (11) comportant au moins une console de guidage (8) s'avançant en porte-à-faux dans le sens opposé à la direction de transport (7) et l'autre glissière transversale (11) comportant au moins une console de guidage (8) s'avançant en porte-à-faux à partir du portique (4) dans la direction de transport (7).

4. Dispositif selon la revendication 3, **caractérisé en ce que** pour chaque glissière transversale sont prévues au moins deux, de préférence plusieurs consoles de guidage.

5. Procédé permettant le fonctionnement d'un dispositif selon l'une des revendications 1 à 4, dans lequel les défauts des bois, déposés sur un convoyeur longitudinal, sont d'abord détectés par un capteur, mesurés et les données sont stockées temporairement, à la suite de quoi les défauts sont réparés au moyen d'un outil disposé en aval du capteur par référence à la direction de transport, **caractérisé en ce que** les données de mesure des défauts enregistrés par le capteur sont comparées à des données de mesure stockées en mémoire, en particulier des données de référence, et la quantité de matière requise pour la réparation est calculée à partir de la comparaison et est associée aux données de mesure enregistrées, et **en ce que** la réparation des défauts est effectuée pendant le fonctionnement du dispositif de transport et l'outil utilisé pour la réparation de chaque défaut est déplacé par rapport au défaut déplacé.

6. Procédé selon la revendication 5, **caractérisé en ce que** la vitesse de transport du dispositif de transport est réglée en fonction du nombre de défauts à réparer et du nombre d'outils présents, en vue d'obtenir une capacité de transport maximale.

7. Procédé selon la revendication 5 ou 6, **caractérisé en ce que** la combinaison des séquences opératoires, permettant d'obtenir une vitesse d'avance maximale du dispositif de transport, est sélectionnée, pour les données de mesure enregistrées, en fonction de la position respective et de la quantité de matière calculée nécessaire à la réparation du défaut concerné et du temps de réparation requis à cet effet.

8. Procédé selon l'une quelconque des revendications 5 à 7, **caractérisé en ce que** le capteur détecte la couleur du matériau entourant le défaut, le calculateur détermine la couleur du matériau de remplissage et la stocke dans la mémoire conjointement avec les données du défaut, à la suite de quoi un outil avec une couleur de matériau appropriée à la réparation est affecté à la réparation du défaut et est pris en compte lors du calcul de la vitesse d'avance.
